# DEMANDE DE BREVET EUROPEEN

(11) **EP 4 714 893 A1**
(43) Date de publication de la demande: **25.03.2026**
(21) Numéro de dépôt: 25202954.1
(22) Date de dépôt: 18.09.2025
(51) Int. Cl.: B66F 9/065, B66F 9/075

(54) **ENGIN DE MANUTENTION ELECTRIQUE ALIMENTE PAR UNE BATTERIE**

(30) Priorité: 23.09.2024 FR 2410114
(71) Demandeur: MANITOU BF, 44150 Ancenis (FR)
(72) Inventeur: BERTRAND, Pierre, 44150 ANCENIS (FR); LEON, David, 44150 ANCENIS (FR); GASCHET, Benoît, 44150 ANCENIS (FR)
(74) Mandataire: Ipsilon

(57) **Abrégé**

Engin (1) de manutention comprenant un châssis, un bras (5) couplé par une liaison pivot (6) à l'arrière du châssis pour un déplacement entre une position basse et une position haute, un train avant (7) de roues (8) directrices, un train arrière (9) de roues (10) directrices, un ensemble de motorisation électrique des roues (8 ; 10) directrices alimenté par une batterie (11).

La batterie (11) est disposée au moins partiellement sous le bras (5), une première partie de la batterie (11) s'étend sur l'engin (1) à l'avant de l'axe du pivot de la liaison pivot (6) du bras (5) au châssis, une deuxième partie de la batterie (11) s'étend sur l'engin (1) à l'arrière de l'axe du pivot de la liaison pivot (6) du bras (5) au châssis, et la batterie (11) est disposée à l'intérieur du cercle de giration.

## Description

La présente invention concerne le domaine de la manutention de charge.

En particulier, l'invention concerne un engin de manutention de charge à bras pivotant.

Afin de réduire l'impact environnemental d'un engin de manutention à bras pivotant, il est connu d'utiliser une motorisation électrique.

L'utilisation d'une motorisation électrique implique généralement l'installation d'une batterie sur l'engin de capacité suffisante pour fournir de l'énergie sur un cycle donné d'utilisation de la machine, par exemple une journée entière.

Néanmoins, la batterie ne doit pas altérer les performances de l'engin ni la sécurité lors des manœuvres de l'engin. En particulier, lorsqu'un engin à propulsion thermique est modifié pour installer une motorisation électrique, le comportement et les conditions d'utilisation de l'engin modifié doivent être similaires à ceux de l'engin avant modifications.

Un but de l'invention est de disposer d'un engin de manutention électrique à bras dont le comportement et les conditions d'utilisation sont similaires à ceux d'un engin thermique à bras.

A cet effet, l'invention a pour objet un engin de manutention comprenant un châssis avec une partie avant et une partie arrière, un bras s'étendant longitudinalement suivant une direction avant-arrière du châssis couplé par une liaison pivot à l'arrière du châssis pour un déplacement par pivotement entre une position basse et une position haute, un train avant de roues directrices, un train arrière de roues directrices, un ensemble de motorisation électrique des roues directrices du train avant et du train arrière, l'ensemble de motorisation étant alimenté par une batterie,
chaque roue du train avant et du train arrière étant montée mobile en rotation entre une position de braquage maximal à droite et une position de braquage maximal à gauche, le positionnement des roues du train avant dans l'une des positions de braquage maximal et le positionnement des roues du train arrière dans l'autre des positions de braquage maximal permettant le déplacement de l'engin selon une trajectoire circulaire minimale, le cercle passant par la roue du train avant et la roue du train arrière à l'extérieur de la trajectoire lorsque l'engin se déplace selon la trajectoire circulaire minimale définissant un cercle de giration ;
caractérisé **en ce** que la batterie est disposée au moins partiellement sous le bras, en ce qu'une première partie de la batterie s'étend sur l'engin à l'avant de l'axe du pivot de la liaison pivot du bras au châssis, en ce qu'une deuxième partie de la batterie s'étend sur l'engin à l'arrière de l'axe du pivot de la liaison pivot du bras au châssis, et en ce que la batterie est disposée à l'intérieur du cercle de giration.

Le positionnement spécifique de la batterie sous le bras, avec une première partie de la batterie s'étendant sur l'engin à l'avant de l'axe du pivot de la liaison du bras au châssis, et une deuxième partie de la batterie s'étendant sur l'engin à l'arrière de l'axe du pivot de la liaison du bras au châssis, permet d'assurer un bon équilibre des masses sur l'engin et assure une bonne visibilité pour une manutention de charge en toute sécurité.

Par ailleurs, avoir la batterie disposée à l'intérieur du cercle de giration permet de ne pas entraver les déplacements en giration de l'engin.

L'engin présente de préférence une hauteur et une largeur inférieures à 2,50 m, notamment inférieures à 2,10 m.

La batterie peut avoir une capacité comprise entre 30 KWh et 50 KWh.

Selon un mode de réalisation de l'invention, la batterie est accessible depuis l'arrière de l'engin. Une telle position permet d'assurer une maintenance simple et rapide de la batterie.

Selon un mode de réalisation de l'invention, une partie de la batterie s'étend en porte-à-faux à l'arrière du châssis.

Selon un mode de réalisation de l'invention, la partie de la batterie en porte-à-faux comprend une face de dessous, une face arrière et un pan incliné de liaison entre la face de dessous et la face arrière à pente descendante depuis la partie arrière du châssis vers la partie avant du châssis.

Un tel pan incliné permet d'assurer une bonne capacité de franchissement de l'engin, sans risquer d'endommager la batterie.

Selon un mode de réalisation de l'invention, le pan incliné s'étend dans un plan formant un angle compris entre 20° et 40° avec un plan d'appui au sol de l'engin à l'état ponctuel de déplacement sur une surface plane.

Selon un mode de réalisation de l'invention, les roues du train arrière sont reliées entre elles par un essieu, la batterie étant au moins partiellement disposée sur l'engin à l'arrière de l'essieu.

Selon un mode de réalisation de l'invention, la batterie est montée amovible sur l'engin.

Selon un mode de réalisation de l'invention, la batterie est disposée de part et d'autre d'un plan longitudinal médian de l'engin, de préférence de manière sensiblement symétrique de part et d'autre dudit plan longitudinal médian. Cela permet d'améliorer l'équilibre des masses sur l'engin.

Selon un mode de réalisation de l'invention, la batterie comportant une première portion s'étendant d'un côté du plan longitudinal médian de l'engin et une deuxième portion s'étendant du côté opposé dit deuxième côté du plan longitudinal médian de l'engin, le rapport entre la masse M1 de la première portion s'étendant du premier côté du plan longitudinal médian de l'engin et la masse de la deuxième portion s'étendant du deuxième côté opposé d'un plan longitudinal médian de l'engin est compris entre 1 et 0,8.

### Brève description des dessins

L'invention sera bien comprise à la lecture de la description suivante d'exemples de réalisation, en référence aux dessins annexés dans lesquels :
[Fig. 1] représente, en perspective, de manière schématique, un engin de manutention selon l'invention,
[Fig. 2] est une vue de dessus de l'engin de la figure 1,
[Fig. 3] est une vue de dessous de l'engin de la figure 1,
[Fig. 4] est une vue similaire à celle de la figure 3 dans laquelle les roues sont tournées, et
[Fig. 5] est une vue partielle de côté de la partie arrière de l'engin de la figure 1, une roue et un flanc gauche du châssis étant omis.

Dans la suite de la description, les éléments identiques ou de fonctions identiques portent le même signe de référence. A des fins de concision de la présente description, ils ne sont pas décrits en regard de chacune des figures, seules les différences entre les modes de réalisation étant décrites.

Sur les figures, les proportions réelles n'ont pas toujours été respectées, dans un souci de clarté.

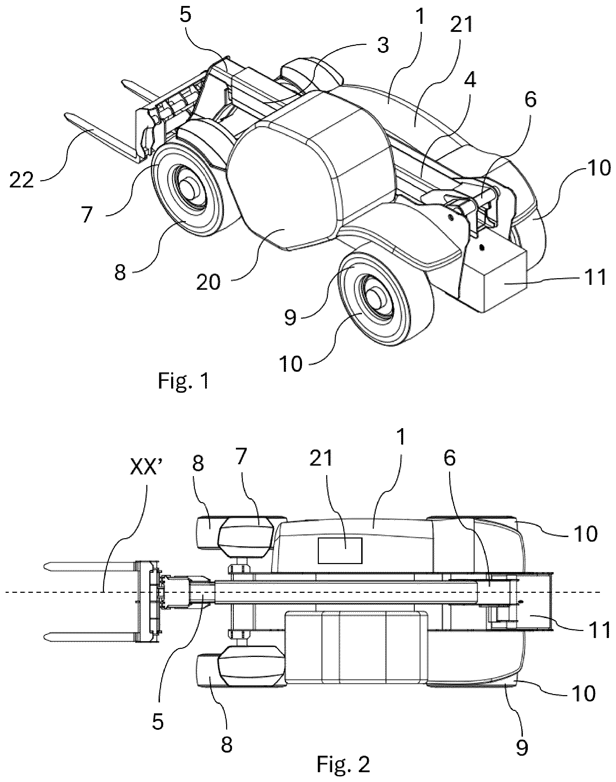

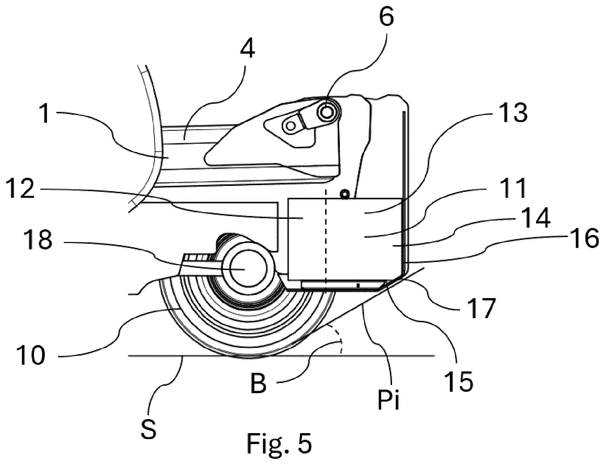

On a illustré sur les figures 1 à 5 un exemple d'engin 1 de manutention de charge selon l'invention, dans cet exemple un engin 1 dit de petit gabarit dont sa hauteur et sa largeur sont inférieures à 2,50 m, notamment inférieures à 2,10 m. Néanmoins, l'invention s'applique aux engins de dimensions plus grandes. En particulier, cet engin peut présenter une longueur de l'ordre de 4,70 m, une largeur de l'ordre de 2 m et une hauteur voisine de 2 m.

L'engin 1 comprend un châssis 2 avec une partie avant 3 et une partie arrière 4. L'engin 1 peut se déplacer en avant, selon un sens allant de la partie arrière 4 vers la partie avant 3, et en arrière, selon un sens allant de la partie avant 3 vers la partie arrière 4.

Dans cet exemple, l'engin 1 comprend une cabine 20 dans laquelle un opérateur peut se positionner pour piloter l'engin 1. En variante, l'engin 1 pourrait être dépourvu de cabine, par exemple en étant pilotable à distance.

L'engin 1 comprend un bras 5 s'étendant longitudinalement suivant une direction avant-arrière XX' du châssis 2. Le bras 5 est couplé par une liaison pivot 6 à l'arrière du châssis 2, c'est-à-dire sur la partie arrière 4, pour un déplacement à pivotement entre une position basse et une position haute.

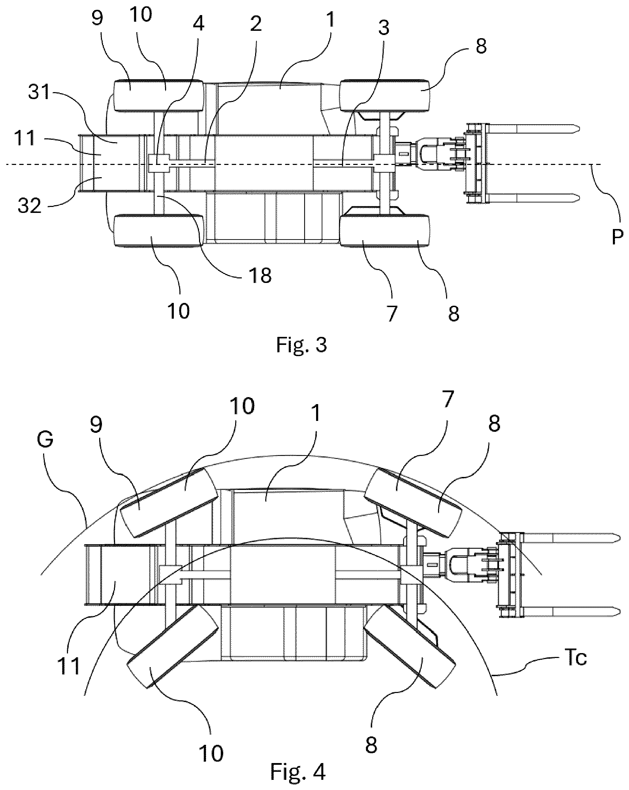

L'engin 1 comprend un train avant 7, équipé de roues directrices 8, et un train arrière 9, également équipé de roues directrices 10. Les roues directrices 8, 10 du train avant 7 et du train arrière 9 sont motorisées par un ensemble de motorisation électrique alimenté par une batterie 11. L'ensemble de motorisation électrique comprend également un ou plusieurs moteurs électriques 21, par exemple disposés entre le train avant 7 et le train arrière 9, notamment positionnés en totalité ou en partie sous le bras 5 ou à l'opposé de la cabine 20 par rapport au plan médian longitudinal P de l'engin 1. Le moteur ou les moteurs 21 peuvent s'étendre de façon longitudinale ou transversale. Chaque roue 8, 10 du train avant 7 et du train arrière 9 est mobile en rotation entre une position de braquage maximal à droite et une position de braquage maximal à gauche. A titre d'illustration, sur la figure 4, les roues 8 du train avant 7 sont dans la position de braquage maximal à gauche et les roues 10 du train arrière 9 sont dans la position de braquage maximal à droite.

Le positionnement des roues 8 du train avant 7 dans l'une des positions de braquage maximal et le positionnement des roues 10 du train arrière 9 dans l'autre des positions de braquage maximal, comme sur la figure 4, permettent le déplacement de l'engin 1 selon une trajectoire circulaire minimale Tc, c'est-à-dire le plus petit cercle que peut suivre l'engin 1.

Un cercle de giration G de l'engin 1 est défini par le cercle passant par la roue du train avant 7 et la roue du train arrière 9 à l'extérieur de la trajectoire lorsque l'engin 1 se déplace selon cette trajectoire circulaire minimale Tc. En particulier, le centre du cercle de giration G est confondu avec le centre de la trajectoire circulaire minimale Tc.

La batterie 11 est disposée sous le bras 5, assurant ainsi une bonne visibilité pour les manœuvres de l'engin 1. Une première partie 12 de la batterie 11 s'étend sur l'engin 1 à l'avant de l'axe du pivot de la liaison pivot 6 du bras 5 au châssis 2, tandis qu'une deuxième partie 13 de la batterie 11 s'étend sur l'engin 1 à l'arrière de l'axe du pivot de la liaison pivot 6 du bras 5 au châssis 2.

Généralement, la batterie 11 est disposée de part et d'autre d'un plan longitudinal médian P de l'engin 1, de préférence de manière symétrique de part et d'autre dudit plan longitudinal médian P. En particulier, la batterie 11 comportant une première portion 31 s'étendant d'un premier côté du plan longitudinal médian P de l'engin 1 et une deuxième portion 32 s'étendant d'un deuxième côté opposé du plan longitudinal médian P de l'engin 1, le rapport entre la masse M1 de la première portion 31 s'étendant du premier côté du plan longitudinal médian P de l'engin 1 et la masse M2 de la deuxième portion 32 s'étendant du deuxième côté opposé du plan longitudinal médian P de l'engin 1 est compris entre 1 et 0,8.

Cette disposition assure une bonne répartition de la masse de la batterie 11 sur l'engin 1. De plus, cette position permet de faire contre-poids vis-à-vis de la charge portée par un outil 22 à l'avant du bras 5.

Les roues 10 du train arrière 9 sont reliées entre elles par un essieu 18, la batterie 11 étant au moins partiellement disposée sur l'engin 1 à l'arrière de l'essieu 18.

La batterie 11 est également disposée à l'intérieur du cercle de giration G. Cela permet de ne pas entraver les mouvements de l'engin 1 quelle que soit la direction de déplacement de l'engin 1, notamment lorsque l'engin 1 se déplace le long de la trajectoire circulaire minimale Tc, facilitant l'utilisation de l'engin 1.

La batterie 11 est accessible depuis l'arrière de l'engin 1 peut être montée amovible, ce qui facilite sa maintenance.

Dans cet exemple, une partie 14 de la batterie 11 s'étend en porte-à-faux à l'arrière du châssis 2. Pour ne pas limiter les capacités de franchissement de l'engin 1, cette partie 14 de la batterie 11 en porte-à-faux comprend une face de dessous 15, une face arrière 16 et un pan incliné 17 de liaison entre la face de dessous 15 et la face arrière 16 à pente descendante depuis la partie arrière 4 du châssis 2 vers la partie avant 3 du châssis 2. Le pan incliné 17 s'étend dans un plan Pi formant un angle B compris entre 20° et 40° avec un plan d'appui S au sol de l'engin 1 à l'état ponctuel de déplacement sur une surface plane.

## Revendications

1. Engin (1) de manutention comprenant un châssis (2) avec une partie avant (3) et une partie arrière (4), un bras (5) s'étendant longitudinalement suivant une direction avant-arrière (XX') du châssis (2) couplé par une liaison pivot (6) à l'arrière du châssis (2) pour un déplacement par pivotement entre une position basse et une position haute, un train avant (7) de roues (8) directrices, un train arrière (9) de roues (10) directrices, un ensemble de motorisation électrique des roues (8 ; 10) directrices du train avant (7) et du train arrière (9), l'ensemble de motorisation étant alimenté par une batterie (11),
chaque roue (8 ; 9) du train avant (7) et du train arrière (9) étant montée mobile en rotation entre une position de braquage maximal à droite et une position de braquage maximal à gauche, le positionnement des roues (8) du train avant (7) dans l'une des positions de braquage maximal et le positionnement des roues (10) du train arrière (9) dans l'autre des positions de braquage maximal permettant le déplacement de l'engin (1) selon une trajectoire circulaire minimale (Tc), le cercle passant par la roue du train avant (7) et la roue du train arrière (9) à l'extérieur de la trajectoire lorsque l'engin (1) se déplace selon la trajectoire circulaire minimale (Tc) définissant un cercle de giration (G) ;
**caractérisé en ce que** la batterie (11) est disposée au moins partiellement sous le bras (5), **en ce qu'**une première partie (12) de la batterie (11) s'étend sur l'engin (1) à l'avant de l'axe du pivot de la liaison pivot (6) du bras (5) au châssis (2), **en ce qu'**une deuxième partie (13) de la batterie (11) s'étend sur l'engin (1) à l'arrière de l'axe du pivot de la liaison pivot (6) du bras (5) au châssis (2),
et **en ce que** la batterie (11) est disposée à l'intérieur du cercle de giration (G).

2. Engin (1) selon la revendication 1, **caractérisé en ce que** la batterie (11) est accessible depuis l'arrière de l'engin (1).

3. Engin (1) selon l'une des revendications 1 et 2, **caractérisé en ce qu'**une partie (14) de la batterie (11) s'étend en porte-à-faux à l'arrière du châssis (2).

4. Engin (1) selon la revendication précédente, **caractérisé en ce que** la partie (14) de la batterie (11) en porte-à-faux comprend une face de dessous (15), une face arrière (16) et un pan incliné (17) de liaison entre la face de dessous (15) et la face arrière (16) à pente descendante depuis la partie arrière (4) du châssis (2) vers la partie avant (3) du châssis (2).

5. Engin (1) selon la revendication précédente, **caractérisé en ce que** le pan incliné (17) s'étend dans un plan (Pi) formant un angle (B) compris entre 20° et 40° avec un plan d'appui (S) au sol de l'engin (1) à l'état ponctuel de déplacement sur une surface plane.

6. Engin (1) selon l'une quelconque des revendications précédentes, **caractérisé en ce que** les roues (10) du train arrière (9) sont reliées entre elles par un essieu (18), la batterie (11) étant au moins partiellement disposée sur l'engin (1) à l'arrière de l'essieu (18).

7. Engin (1) selon l'une quelconque des revendications précédentes, **caractérisé en ce que** la batterie (11) est montée amovible sur l'engin (1).

8. Engin (1) selon l'une quelconque des revendications précédentes, **caractérisé en ce que** la batterie (11) est disposée de part et d'autre d'un plan longitudinal médian (P) de l'engin (1), de préférence de manière sensiblement symétrique de part et d'autre dudit plan longitudinal médian (P).

9. Engin (1) selon l'une quelconque la revendication 8, **caractérisé en ce que** la batterie (11) comportant une première portion s'étendant d'un côté du plan longitudinal médian (P) de l'engin (1) et une deuxième portion s'étendant du côté opposé dit deuxième côté du plan longitudinal médian (P) de l'engin (1), le rapport entre la masse M1 de la première portion s'étendant du premier côté du plan longitudinal médian (P) de l'engin (1) et la masse (M2) de la deuxième portion s'étendant du deuxième côté opposé d'un plan longitudinal médian (P) de l'engin (1) est compris entre 1 et 0,8.
